Europäisches Patentamt

European Patent Office

Office européen des brevets

(11) Publication number: **0 346 487**
**A1**

## EUROPEAN PATENT APPLICATION
published in accordance with Art. 158(3) EPC

(21) Application number: **89900324.8**

(22) Date of filing: **13.12.88**

Data of the international application taken as a basis:

(86) International application number:
**PCT/JP88/01263**

(87) International publication number:
**WO89/06390 (13.07.89 89/15)**

(51) Int. Cl.³: **G 05 B 19/18**
**G 05 B 19/19**

(30) Priority: **28.12.87 JP 332127/87**

(43) Date of publication of application:
**20.12.89 Bulletin 89/51**

(84) Designated Contracting States:
**CH DE FR GB IT LI**

(71) Applicant: **FANUC LTD**
**3580, Shibokusa Aza-Komanba Oshino-mura**
**Minamitsuru-gun Yamanashi 401-05(JP)**

(72) Inventor: **KAWAMURA, Hideaki**
**1375-5, Narahara-cho**
**Hachioji-shi Tokyo 193(JP)**

(72) Inventor: **SASAKI, Takao**
**Esuteto-Hachioji 2-502 469-4, Kobiki-cho**
**Hachioji-shi Tokyo 193(JP)**

(72) Inventor: **FUJIBAYASHI, Kentaro**
**2-8-6, Nishikubo**
**Musashino-shi Tokyo 180(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **NUMERICAL CONTROL APPARATUS.**

(57) One or more processors (11a to 11c) for controlling machining stations having one or more shafts are arranged. The number of processors depends upon the constitution of the machine tool, and these processors are connected via first common bus (31) to a CRT and MDI unit (21), NC machining program supply means (22, 24), and programmable controller (23) that controls power sequence of the machine. These units are commonly used by the processors. Further, the processors (11a to 11c) are connected to shaft control units (41a to 41c) via a second common bus (51) so that each of the processors can exclusively use a predetermined shaft control unit through which the corresponding machining station is controlled.

FIG. 1

EP 0 346 487 A1

## DESCRIPTION

## NUMERICAL CONTROL APPARATUS

### Technical Field

This invention relates to a numerical control apparatus and, more particularly, to a flexible, extendible numerical control apparatus for controlling a variety of NC machine tools having a plurality of independently operable machining stations.

### Background Art

When numerically controlling an NC machine tool having a plurality of independently controllable machining stations, such as a simultaneous four-axis lathe having two tool rests or other types of compound machines, conventionally control is performed by providing a plurality numerical control apparatus or by specially designing a numerical control apparatus dedicated to machine tools.

However, the problem of high cost is encountered with the system for exercising control by providing a plurality of numerically control apparatus. With the method in which a special-purpose numerical control apparatus is designed, the hardware and software must be designed on each occasion, resulting in poor efficiency, and personnel and labor are required. The end result is high cost.

Accordingly, an object of the present invention is to provide a flexible, extendible numerical control apparatus for controlling a variety of NC machine tools having a plurality of independently operable machining stations.

## Disclosure of the Invention

In the numerical control apparatus of the present invention, a plurality of processors for numerical control are connected, via a first common bus, to a CRT/MDI unit, NC machining program supply means and a programmable controller for controlling a machine magnetics sequence, these units are made to share each of the processors, each processor and a plurality of axis controllers are connected to a second common bus, and each processor is caused to use exclusively a predetermined axis controller to control machining stations connected to the axis controllers.

## Brief Description of the Drawings

Fig. 1 is a block diagram of a numerical control apparatus according to the present invention, and

Fig. 2 is a system configuration diagram for a case where the present invention is applied to a simultaneous four-axis lathe equipped with a C axis.

## Best Mode for Carrying Out the Invention

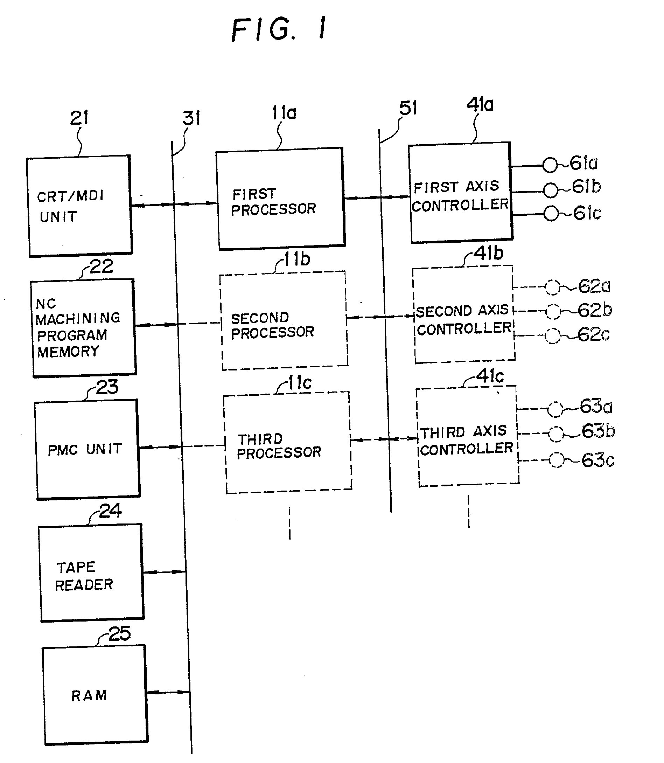

Fig. 1 is a block diagram of a numerical control apparatus according to the present invention.

Numerals 11a, 11b, 11c denote first, second and third processors for numerical control, one of which, say, the first processor 11a, executes numerical control processing and serves to effect adjustment in such a manner that the entirety functions organically.

It is permissible to separately provide a processor having such a supervisor-type function.

Numeral 21 denotes a CRT/MDI unit in which a graphic display device and a manual data input device having various keys are arranged in integrated fashion. Numeral 22 denotes a memory storing an NC machining program, 23 a programmable controller (PMC unit) for controlling a machine magnetics sequence, 24 a tape reader for reading the machining program from an NC tape and storing the program in the memory 22, 25 a RAM for storing data, and 31 a first common bus.

The processors 11a - 11c are connected to the units 21 - 25 via the first common bus 31, and the units 21 - 25 are commonly connected to each of the processors. The common bus 31 is dedicated to the first processor in accordance with predetermined standards by the bus control function of the first processor, and this processor is capable of accessing or utilizing each of the units. For example, it is so arranged that each processor can monopolize the bus in time sharing fashion or in a requested generation sequence. Exchange of data among processors takes place via the RAM 25.

Numerals 41a - 41c denote first through third axis controllers, and 61a - 63c represent servomotors or spindle motors. Each of the axis controllers 41a - 41c is constituted by a pulse interpolator and a servo circuit provided for each axis, and the axis controllers are arranged so as to be capable of controlling the rotation of predetermined ones of the motors 61a - 63c connected thereto.

The processors 11a - 11c are connected to the axis controllers 41a - 41c via a second common bus 51, and each processor makes exclusive use solely of the axis controller assigned to it. The arrangement is such that when a processor is designated, exclusive use can be made of any of the axis controllers. The common bus 51 is successively monopolized by the processors in, e.g., time-shared fashion, in accordance with predetermined standards by the bus control function of the first processor, and each processor is capable of making exclusive use solely of the axis controller assigned to it.

The number of juxtaposed processors and the number of juxtaposed axis controllers can be increased or decreased in conformity with the arrangement of the machine tools to be controlled, and the configuration is both flexible and extendible. That is, if the system involving an axis (limited to one axis) related to a single machining station is referred to as a channel, then the arrangement is such that a processor is capable of controlling one or more channels. The number of installed processors, the number of installed axis controllers and the number of motors are decided in dependence upon the number of channels of machine tools.

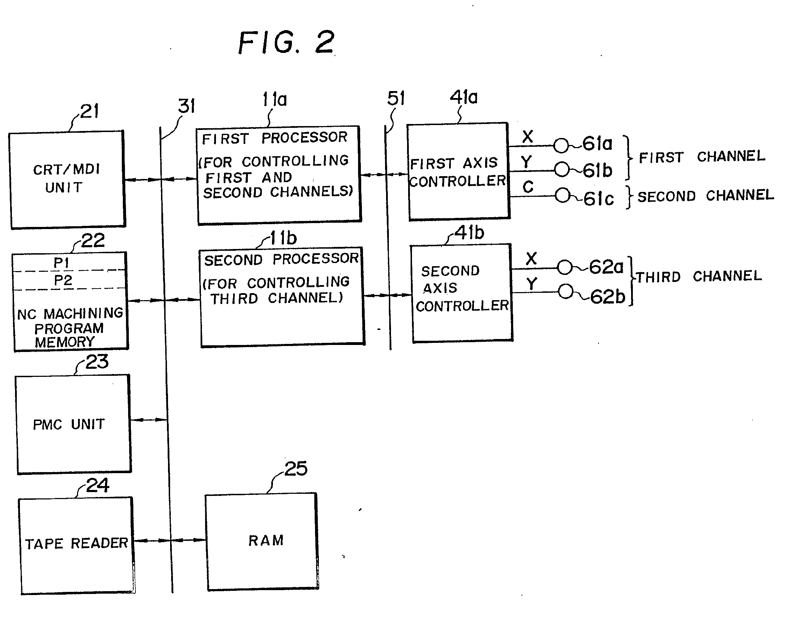

For example, the minimum apparatus configuration has one processor, one axis controller and the required number of motors, as indicated by the solid line in Fig. 1. However, as will be described below, the configuration of a numerical control apparatus for a simultaneous four-axis lathe equipped with a C axis can have its number of processors and its number of axis controllers increased or decreased, as shown in Fig. 2.

Accordingly, with this apparatus, the number of processors and the number of axis controllers are decided in dependence upon the machine tool arrangement, a printed circuit board having processors which incorporate software peculiar to machine tools as well as axis controllers mounted thereon is inserted into a printed circuit board receptacle of an NC apparatus or an unnecessary printed circuit board is extracted, thereby making it possible to control a variety of machine tools.

Fig. 2 shows an example of the arrangement of a numerical control apparatus according to the present invention for controlling a simultaneous four-axis lathe having a C axis. Portions similar to those shown in Fig. 1 are designated by like reference characters.

In a simultaneous four-axis lathe having a C axis, (i) first and second NC machining programs having a queuing command are provided, and a workpiece is subjected to machining by controlling the movement of corresponding first and second tool rests in accordance with the first and second NC machining programs while synchronization is achieved by the queuing commands, and (ii) the workpiece is subjected to drilling or grooving by positionally controlling the workpice in the direction of rotation (in the C-axis direction). More specifically, the simultaneous four-axis lather equipped with a C axis is constituted by five axes, namely X, Z axes for controlling the movement of the first tool rest, X, Z axes for controlling the movement of the second tool rest, and the C axis. Let the X, Z axes for the first tool rest be a first channel, the C axis a second channel, and the X, Z axes for the second tool rest a third channel.

Accordingly, the first processor 11a for controlling the first and second channels and the second processor 11b for controlling the third channel are provided, and the first axis controller 41a for controlling axis motors 61a - 61c of the first and second channels and the second axis controller 41b for controlling axis motors 62a, 62b of the third channel are provided.

A first NC machining program P1 for controlling the first and second channels and an NC machining program P2 for controlling the third channel are stored in the memory 22. A function is provided for mutually queuing execution of the NC machining programs P1, P2 between the first and second processors 11a, 11b by a queuing command.

-7-

Under these conditions, the apparatus of Fig. 2 is made to function as a numerical control apparatus for a simultaneous four-axis lathe equipped with a C axis if, by suitable means such as the CRT/MDI unit 21, the first axis controller 41a is assigned to the first processor 11a, the second axis controller 41b is assigned to the second processor 11b, the first NC machining program P1 is assigned to the first processor 11a and the second NC machining program P2 is assigned to the second processor 11b.

In accordance with the present invention as described above, the arrangement of the apparatus is such that processors and axis controllers can be freely increased or decreased in number in dependence upon the size of the machine tool. Therefore, a variety of machine tools having a plurality of independently operable machining stations can be controlled by a single numerical control apparatus. Accordingly, it is unnecessary to design hardware for each and every machine tool and, by providing the software with universality, design changes can be eliminated or reduced.

Further, in accordance with the invention, the fact that a machine tool having a plurality of machining stations can be controlled by a single numerical control apparatus makes it possible to perform centralized management and control at one location. This facilitates operability without any decline in performance.

Furthermore, since the processors are bus-connected, the queuing of command programs between channels can be readily controlled, and the arrangement is such that the axis controllers are connected to the processors via a separate bus. As a result, there is no decline in performance due to bus contention.

Still further, since the number of motors assigned to each channel can also be set freely depending upon the machine tool, the result is a flexible, inexpensive system configuration.

CLAIMS:

1.    A numerical control apparatus which has a display unit, a manual data input unit, NC machining program supply means and a programmable controller for controlling a magnetics sequence of a machine, and which is for numerically controlling a machining station composed of one or more axes via an axis controller, characterized by comprising:

processors, of which one or more are provided in conformity with a machine tool arrangement, for numerically controlling respective ones of one or a plurality of machining stations;

a first common bus connecting the processors and connecting the display unit, manual data input unit, NC machining program supply means and programmable controller;

axis controllers, of which one or more are provided in conformity with the machine tool arrangement, for driving the machining stations by commands from respective ones of the processors; and

a second common bus connecting the processors and connecting one or more axis controllers used exclusively by the processors.

2.    A numerically control apparatus according to claim 1, characterized in that one processor among said processors is provided with a bus control function for allowing the first and second common buses to be dedicated to a predetermined processor.

3.   A numerically control apparatus according to claim 1, characterized in that the manual data input unit is provided with a function for specifying a correlation between a processor and the axis controller used exclusively by said processor.

FIG. 1

## FIG. 2

# INTERNATIONAL SEARCH REPORT

0346487

International Application No PCT/JP88/01263

## I. CLASSIFICATION OF SUBJECT MATTER (If several classification symbols apply, indicate all) 6

According to International Patent Classification (IPC) or to both National Classification and IPC

Int.Cl$^4$    G05B19/18, 19/19

## II. FIELDS SEARCHED

### Minimum Documentation Searched 7

| Classification System | Classification Symbols |
|---|---|
| IPC | G05B19/18, 19/19, 19/417 |

### Documentation Searched other than Minimum Documentation to the Extent that such Documents are included in the Fields Searched 8

| | |
|---|---|
| Jitsuyo Shinan Koho | 1971 – 1988 |
| Kokai Jitsuyo Shinan Koho | 1971 – 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 57-17012 (Fujitsu Fanuc, Ltd.) 28 January 1982 (28. 01. 82) Page 2, upper left column, line 5 to lower right column, line 11 & WO, A, 8200211 & EP, A, 55301 | 1 |
| Y | JP, A, 59-81706 (General Electric Co.) 11 May 1984 (11. 05. 84) Fig. 1 & IL, A, 68868 & EP, A, 103714 & US, A, 4514814 | 1 |
| A | JP, A, 60-218113 (Mitsubishi Electric Corporation) 31 October 1985 (31. 10. 85) Page 2, lower left column, line 17 to page 3, upper right column, line 2 (Family: none) | 1-3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 13, 1989 (13. 03. 89) | March 27, 1989 (27. 03. 89) |

| International Searching Authority | Signature of Authorized Officer |
|---|---|
| Japanese Patent Office | |